# EUROPEAN PATENT APPLICATION

(11) **EP 2 023 520 A1**
(43) Date of publication of application: **11.02.2009**
(21) Application number: 07015536.1
(22) Date of filing: 07.08.2007
(51) Int. Cl.: H04L 1/00, H04L 1/18

(54) **Device for and method of transmitting data packets**

(71) Applicant: Nokia Siemens Networks Oy, 02610 Espoo (FI); Fraunhofer-Gesellschaft zur Förderung der Angewandten Forschung e.V., 80686 München (DE)
(72) Inventor: Eichinger, Josef Martin, 85464 Neufinsing (DE); Haustein, Thomas Dr., 81735 München (DE); Ibing, Andreas, 14055 Berlin (DE); Inderst, Robert, 82343 Pöcking (DE); Migge, Kay, 81379 München (DE); Zirwas, Wolfgang, 81249 München (DE)
(74) Representative: Bruglachner, Thomas E.

(57) **Abstract**

A method of transmitting data packets in a network is provided, wherein the method comprises providing a data packet to be transmitted, determining a current modulation and coding scheme, and checking whether the provided data packet is a new data packet or a data packet already transmitted a first time. Furthermore, the method comprises transmitting the provided data packet using the current modulation and coding scheme in case the data packet is a new data packet, and, in case the provided data packet was already transmitted a first time, retransmitting the selected data packet using the same modulation and coding scheme as the first time.

## Description

### Field of invention

The invention relates to a device for transmitting data packets. Further, the invention relates to a method of transmitting data packets, to a computer readable medium and to a program element.

### Art Background

In data transmission systems noise, interference and channel fluctuations may cause a loss of correctly received data. A standard means is appropriate coding which enables the receiver of a message to correctly decode the message as long as all errors within the coded data block can be corrected. So called error correcting codes always come at the cost of spectral efficiency, rate or throughput.

A well known alternative option is the retransmitting of packets identified as erroneous but this requires a feedback channel and appropriate means to differentiate between correct and false packets. A standard means for this is a CRC-check, which is generated at the transmitter from the packet and which is transmitted together with the data block to the receiver.

Provided a feedback loop, a CRC check and a suitable coding, a so-called hybrid-ARQ system can be set up. The advantages of H-ARQ schemes against an ARQ scheme (this just detects the retransmitted message independently from the first one) is that the falsely detected message is stored at the receiver in an appropriate stage and will be combined with the retransmitted message later. Depending on the combination scheme different gains can be realized.

A common technique is the so-called chase combining, which allows a maximum ratio combining of modulated and coded symbols in front of the demodulator. This special scheme, which can be favorable in terms of implementation complexity, requires the modulation and coding scheme (MCS) including puncturing, and interleaving for the retransmitted blocks to be identical with the original message.

In a radio transmission scheme with a shared medium for transmission the available resources e.g. in frequency, time or space are often used in a scheduled fashion in order to avoid collisions and to allow interference management and e.g. fairness among users.

In the 3GPP-LTE it is agreed as a working assumption that in the downlink all resource blocks (RBs) within one time slot (time transmission interval / TTI) given to a particular user will use the same MCS. The rational behind this assumption is that each user reports the CQI (channel quality indicator) value for the top-M RBs which hopefully will have very similar CQls at least when the channel transfer function between one transmit antenna and one receive antenna is dominating the SINR (signal to interference plus noise ratio) experienced from the receive terminal. Given this, then the feedback overhead for the CQI signaling can be reduced.

If case of packets with different MCS within one TTI, the MCS mode has to be transmitted for each RB which is undesirable.

There may be a need for device for and a method of transmitting of data packets which may have an improved performance or increased flexibility.

### Summary of the Invention

This need may be met by a device for and a method of transmitting data packets, a program element, and a computer-readable medium according to the independent claims. Further embodiments of the present invention are described by the dependent claims.

According to an exemplary embodiment a method of transmitting data packets in a network is provided, wherein the method comprises providing a data packet to be transmitted, determining a current modulation and coding scheme, and checking whether the provided data packet is a new data packet or a data packet already transmitted a first time. Furthermore, the method comprises transmitting the provided data packet using the current modulation and coding scheme in case the data packet is a new data packet, and, in case the provided data packet was already transmitted a first time, retransmitting the selected data packet using the same modulation and coding scheme as the first time.

In particular, the network may be a mobile network or cellular network. For example, the data may be transmitted from a sending unit to a receiving unit. Furthermore, the first modulation and coding scheme and the current modulation and coding scheme may be different. In particular, the modulation and coding scheme, the data to be retransmitted were transmitted the first time, may be called first modulation and coding scheme. In that case, the retransmitting may be performed according to the first modulation and coding scheme even in case the current modulation and coding scheme and the first modulation and coding scheme are different. In particular, the providing of the data packets may be done by selecting data packets from one or more buffers according to fixed rules. The above described functions may be performed by one or several units, e.g. by a scheduler and/or mapping unit. That is, according to an exemplary embodiment it may be possible to provide a method in which a scheduler and/or a mapping unit may provide the ability to choose between different modulation and coding schemes. In particular, the scheduler may provide a current modulation and coding scheme which will depend on current channel state information.

According to an exemplary embodiment a device for scheduling data packets is provided, wherein the device comprising a determination unit adapted to determine a modulation and coding scheme for a transmission of a data packet, and wherein the determination is performed depending on the fact whether a new data packet is to be transmitted or a data packet is to be retransmitted, which was already transmitted a first time.

In particular, the determination unit may enable a mixed transmission of data packets, e.g. a transmission in which a first data packet is transmitted using a first modulation and coding scheme while a second data packet is transmitted by using a second modulation and coding scheme. Thus, it may be possible to choose one of several possible modulation and coding schemes depending on the decision whether a data packet to be transmitted is a new data packet or a data packet already transmitted a first time.

According to an exemplary embodiment a program element is provided, which, when being executed by a processor, is adapted to control or carry out a method of transmitting data packets according to an exemplary embodiment.

According to an exemplary embodiment a computer-readable medium is provided, in which a computer program is stored which, when being executed by a processor, is adapted to control or carry out a method of transmitting data packets according to an exemplary embodiment.

The terms "new data packet" may particularly denote a data packet which was not already transmitted a first time from a sending unit to a receiving unit. That is, this term may form a contrast to the term "old data packet" or "retransmitted data packet" which may particularly denote a data packet which was already transmitted a first time and which may be retransmitted due to any reason, e.g. due to the fact that the data packet was not correctly received the first time.

The term "current modulation and coding scheme" may particularly denote a modulation and coding scheme which is, under consideration of present or current conditions or channel state information, a suitable or optimal modulation and coding scheme. In particular, the suitable modulation and coding scheme may change over time since the transmission channel may be subject to variations in time and frequency. Thus, the scheduler may change a respective scheduling map from time to time. In particular, a scheduler may be an entity which calculates the resource schedule based on available information e.g. about channel state information, quality of service requirements of the users or services, actual buffer occupancy or alike.

By providing a method according which a modulation and coding scheme is chosen according to the type of data packets to be transmitted, i.e. whether the data packets were already transmitted a first time or is to be transmitted a first time, it may be possible to solve a conflict between time and frequency depending scheduling and the requirement of the same modulation and coding scheme for chase combining. That is, when enabling a scheduler to set up a scheduling map according which different modulation and coding scheme may be used depending on the type of data, it may be possible to easily perform chase combining of transmitted data packets. Therefore, the drawbacks of so-called Hybrid Automatic Repeat reQuest (H-ARQ) schemes may be avoided, since according to such H-ARQ schemes retransmitted data packets may be retransmitted with the same modulation and coding scheme different to that which was used by transmitting the data packets the first time.

In particular, when providing the possibility to chose between several modulation and coding schemes as disclosed in an exemplary embodiment, it may be possible to overcome drawbacks of a common parallel stop-and-wait process according which the scheduler might wait till all transmissions are terminated, before scheduling new data packets or data blocks with a changed modulation and coding scheme. For example, when using a method according to an exemplary embodiment it may be possible to exploit given transmission resources in a more efficient way, since new processes, e.g. when transmitting new data packets, may be started before all old data packets, e.g. data packets to be retransmitted, are correctly received on the receiving side. Thus, an increased throughput may be possible. Furthermore, it may be possible to reduce the handling of parallel stop-and-wait processes, which may hard to handle, when an individual data rate is increased over a certain limit, e.g. a limit that is targeted in HSDPA systems.

When using a method according to an exemplary embodiment it may be possible for a scheduler to use new modulation and coding schemes even in cases retransmitting processes are still unfinished due to Negative ACKnowledgement (NACK) or time-out. Thus, complexity reduced schemes like chase combining may be supported while at the same time advantages from a flexible and fast channel adaptive scheduling may be exploited. Furthermore, in case of chase combining it may be possible to omit a signalling for the retransmitted packet regarding the used modulation and coding scheme.

A gist of an exemplary embodiment may be seen in providing a method of transmitting old and new data packets via a network, wherein for the old data packets a first modulation and coding scheme is used, while for the new data a current modulation and coding scheme is used. In particular, the transmitting of the old data packets and the new data packets may be done in an interleaving way, i.e. new data packets may be transmitted before all old data packets are correctly received by the receiving side. Since it may be possible to ensure that the original modulation and coding scheme is used for the retransmitting of old data it may still be possible to perform a chase combining procedure thus possibly leading to an increased throughput.

Next, further exemplary embodiments of the method of transmitting data packets are described. However, these embodiments also apply to the device for scheduling data packets, the program element, and the computer-readable medium.

According to another exemplary embodiment of the method for the retransmitting of the data packet the modulation and coding scheme including puncturing and/or interleaving of the data packet is identical as in the first transmitting of the retransmitted data packet.

By using the same modulation and coding scheme including puncturing and/or interleaving of the data packet as in the first transmission it may be possible to enable a chase combining in an efficient way.

According to another exemplary embodiment of the method the current modulation and coding scheme is determined depending on at least one of the criteria of the group consisting of on channel state information, a quality of service requirements of users or services, and actual buffer occupancy.

According to another exemplary embodiment of the method the transmission of new data packets is separated from the transmission of retransmitted data packets.

By providing a separation between newly transmitted data packets and retransmitted data packets a suitable measure for facilitating the use of different modulation and coding schemes in the transmission may be provided, since the separated data packets may be easily handled in different ways on the receiving side.

According to another exemplary embodiment of the method the separation is performed in time. In particular, the separation may be performed by using a different time slot for the retransmitted data packet.

According to another exemplary embodiment of the method the separation is performed in space. In particular, the separation may be performed by using different antennas for new data packets and for retransmitted data packets. The different antennas may be formed by two distinct antennas or at least by one antenna emitting in different directions, e.g. has a directional characteristic.

According to another exemplary embodiment of the method new data packets and retransmitting data packets are mapped into a same time slot. In particular, the separation is performed by using separate positions in a time slot for new data packets and retransmitted data packets, wherein the respective positions of the data packets are signalled by indicators. For example, the positions of the retransmitted data packets may be indicated and/or the positions of the newly transmitted data packets. For example, such an indicator may be a field in the header in which respective positions are written, or other suitable measurements.

In all the above described separation types it may be possible to aggregate data packets for retransmitting using the same modulation and coding scheme.

Next, further exemplary embodiments of the device for scheduling data packets are described. However, these embodiments also apply to the method of transmitting data packets, the program element, and the computer-readable medium.

According to another exemplary embodiment of the device the determination unit is adapted to select a current modulation and coding scheme in case a new data packet is to be transmitted. In particular, the determination unit may be further adapted, in case the data packet to be transmitted was already transmitted a first time by using a first modulation and coding scheme, to select the first modulation and coding scheme.

Thus, a device may be provided enabling a distinct handling of new data packets and data packets already transmitted a first time.

According to another exemplary embodiment of the device the determination unit is adapted to select two different modulation and coding schemes for a mapping of data packets.

According to another exemplary embodiment of the device the device is adapted to enable a separated transmission of new data packets and retransmitted data packets. In particular, the transmission may be separated in time and/or in space, and/or by using separate positions in a time slot for new data packets and retransmitted data packets, wherein the respective positions of the retransmitted data packets are signalled by an indicator.

Summarizing an exemplary aspect of the invention may be seen in the fact that a method for transmitting data is provided, wherein the method comprises determining a first modulation and coding scheme to transmit a first data packet, transmitting the first data packet using the determined modulation and coding scheme, redetermining a second modulation and coding scheme to transmit a second data packet, checking whether the first data packet is correctly received, and retransmitting the first data packet using the first modulation and coding scheme in case the result of the checking is negative.

Another exemplary aspect of the invention may be seen in the fact that a method of transmitting data in a network is provided, wherein the method comprises transmitting a first data packet using a first modulation and coding scheme, determining whether the first data packet is correctly received, and retransmitting the first data packet using the first modulation and coding scheme and second transmission parameters in case it is determined that the first data packet was not correctly received

Another exemplary aspect of the invention may be seen in the fact that a method of transmitting data in a network is provided, wherein the method comprises forming a first data packet from first data, transmitting the first data packet using a first modulation and coding scheme, determining a current modulation and coding scheme, transmitting a second data packet using the current modulation and coding scheme and first transmission parameter, determining whether the first data are correctly received, retransmitting the first data using the first modulation and coding scheme in case it is determined that the first data were not correctly received. The term "transmission parameter" may particularly denote parameters which are changeable in a transmission, e.g. the time slots used for the respective transmission, antennas used for the respective transmission or the like.

It has to be noted that embodiments of the invention have been described with reference to different subject-matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject-matter also any combination between features relating to different subject-matters, in particular between features of the apparatus type claims and features of the method type claims is considered to be disclosed within this application.

The aspects and exemplary embodiments defined above and further aspects of the invention are apparent from the example of embodiment to be described hereinafter and are explained with reference to these examples of embodiment. Features of different exemplary embodiments and/or exemplary aspects may be combined and interchanged with each other.

### Brief Description of the Drawings

Fig. 1 schematically shows a scheduling and mapping scheme.
Fig. 2 schematically shows a scheduling and mapping scheme using different time slots for new data packets and retransmitted data packets.

### Detailed Description

The illustration in the drawings is schematic. It is noted that in different figures, similar or identical elements are provided with similar or identical reference signs.

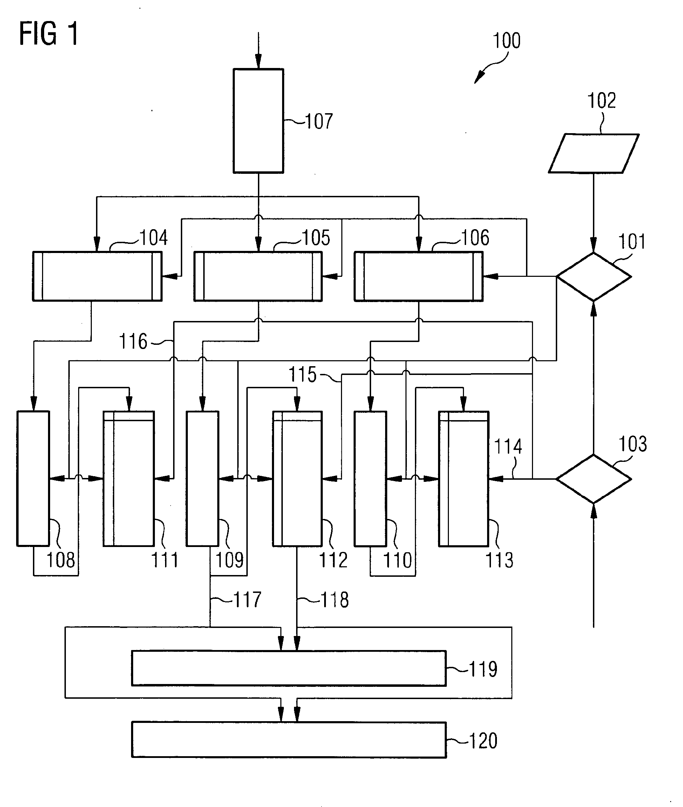

With reference to Fig. 1 a scheduling and mapping scheme and system 100 is schematically depicted. The scheme is controlled by a scheduler 101, which receives channel state information 102 and receives further ACKnowledgement (ACK) or Negative ACKnowledgement (NACK) signals provided by an ACK/NACK detector 103. In particular the scheduler may comprise a determining unit. The scheduler 101 change scheduling maps according to the channel state information. To indicate this in Fig. 1 several modulation and coding scheme (MCS) levels are indicated by the boxes 104, 105, and 106. Furthermore, in Fig. 1 a buffer 107 is schematically depicted which forms an intermediate memory for data of a specific user in a network. Depending on the current scheduling map data packets are mapped by using specific ones of the modulation and coding schemes. In particular, for the transmitting of new data or new data packets a current MCS is used. This current MCS may be an MCS which is most suitable for handling the present channel state, the quality of service requirements of the users and services or actual buffer occupancy. For indicating the use of the current MCS the boxes 108, 109, and 110 are depicted in Fig. 1 each indicating the use of the respective MCS level 104, 105, and 106, respectively for the use of newly transmitted data packets. Parallel to the transmission of the new data packets each new data packet is stored in a buffer, e.g. a Hybrid ARC buffer. Thus, a first H-ARC buffer 111 for the new data packets indicated by box 108, a second H-ARC buffer 112 for the new data packets indicated by box 109, and a third H-ARC buffer 113 for the new data packets indicated by box 110 are schematically depicted in Fig. 1. The data packet stored in these H-ARC buffer may be retransmitted in case the ACK/NACK detector does not receive an ACK signal in a given time period (time-out) or receives an NACK signal. The inducing of this retransmitting is indicated in Fig. 1 by the arrows 114, 115, and 116.

According to the state schematically depicted in Fig. 1 newly transmitted data packets and retransmitted data packets may be mapped into a common time slot as long as the MCS is not changed. The joint mapping is indicated by the arrows 117 and 118 schematically indicating the mapping of new data packets and the mapping of retransmitted data packets, respectively into a first time slot 119 or a second time slot 120.

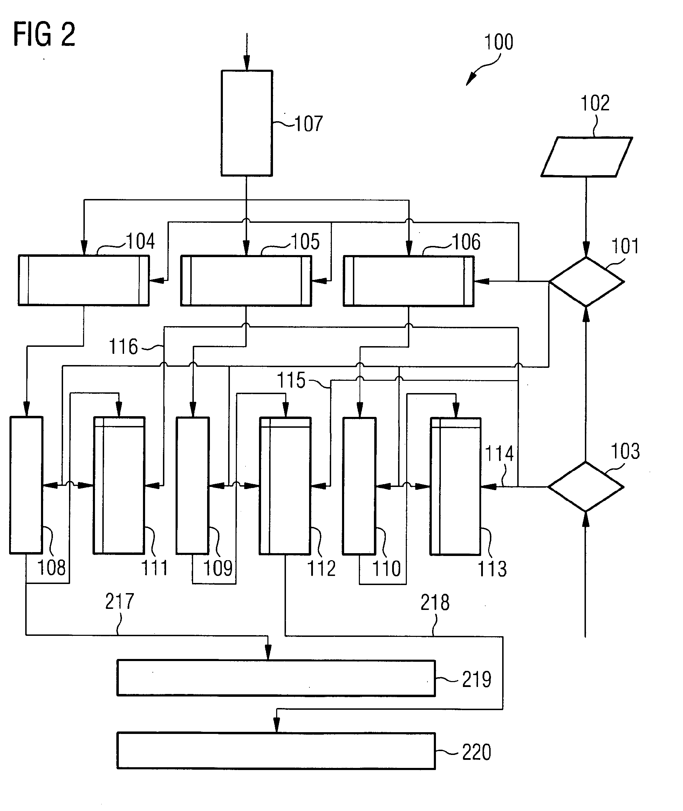

In Fig. 2 the scheduling and mapping scheme and system of Fig. 1 is schematically depicted in a state in which the newly transmitted data packets are mapped into a different time slot, since the MCS for the newly transmitted data is changed. Thus, the scheme depicted in Fig. 2 is in principal the same as the scheme shown in Fig. 1 and is not described in great detail. The main difference relates to the above described difference, i.e. the new data packets are transmitted under using the new MCS level 108 and are mapped into a first time slot 219, which mapping is indicated by arrow 217. While the old data packets, i.e. data packets already transmitted a first time under the use of the MSC level 109 are mapped into a second time slot 220 which is indicated by arrow 218.

Summarizing a gist of an exemplary embodiment may be seen in providing a method of transmitting old and new data packets via a network, wherein for the old data packets a first modulation and coding scheme is used, while for the new data a current modulation and coding scheme is used. That is, the old and new data may be separated during the transmission. For such a separation several exemplary schemes may be used.

In particular, according to a first scheme retransmitted packets will use the same MCS, interleaving, and puncturing as the original packet which may enable chase combining at the receiver. Packets transmitted the first time use the MCS which is actually decided by the scheduler.

In a first alternative of the first scheme the retransmitted packets are transmitted in a different time slot than new packets in case they are encoded with a different MCS according to the scheduler decisions. Thus, a separation in time may be performed. An aggregation of packets for retransmitting using the same MCS is possible.

In a second alternative of the first scheme the retransmitted packets are transmitted from a different transmit antenna than new packets in case the new and retransmitted packets are encoded with a different MCS according to the scheduler decisions and spatial multiplexing is supported as the actual spatial transmission mode. Thus, a separation in space may be performed. An aggregation of packets for retransmitting using the same MCS is possible.

In practice the first scheme may start an independent new H-ARQ process with a new MCS if the scheduler decides for a new MCS for new data packets and the retransmitting packets of the formerly decided MCS scheme are mapped to a different time slot or transmit antenna than the new data packets transmitted at a new MCS scheme. As long as the MCS scheme is not changed new data and retransmitting packets may be mapped into the same time slot (TTI) or onto the same transmit antenna due to the common MCS.

According to a second scheme retransmitted packets will use the same MCS, interleaving, and puncturing as the original packet enabling chase combining at the receiver. Packets transmitted the first time use the MCS which is actually decided by the scheduler. According to the so-called top-M approach all new data packets with a joint MCS are mapped into one TTI and additionally retransmitting packets using an "old" MCS are mapped into the same TTI. The data packet position of the retransmitted packets will be signaled appropriately in order to enable the receiver to extract the right retransmitting packets for chase combining.

The concept of top-M considers that most gain from the frequency depending scheduling can already be obtained if each user signals which M RBs have the best receive conditions. The rational behind this reduced feedback is the need to reduce the feedback information to the lowest possible level in order to avoid the spending of more overhead in feedback than can be gain in throughput due to more information.

Finally, it should be noted that the above-mentioned embodiments illustrate rather then limit the invention, and that those skilled in the art will be capable of designing many alternative embodiments without departing from the scope of the invention as defined by the appended claims. In the claims, any reference signs shall not be construed as limiting the claims. The word "comprising" and "comprises", and the like, does not exclude the presence of elements or steps other than those listed in any claim or the specification as a whole. The singular reference of an element does not exclude the plural reference of such elements and vice-versa. In a device claim enumerating several means, several of these means may be embodied by one and the same item of software or hardware. The mere fact that certain measures are recited in mutually different dependent claims does hot indicate that a combination of these measures cannot be used to advantage.

List of reference signs:
- 100: Scheduling and mapping scheme
- 101: Scheduler
- 102: Channel state information
- 103: ACK/NACK detector
- 104: MCS level 1
- 105: MCS level 2
- 106: MCS level N
- 107: Data buffer for user j
- 108: New data packets MCS 1
- 109: New data packets MCS 2
- 110: New data packets MCS 3
- 111: H-ARQ buffer for retransmitting with MCS 1
- 112: H-ARQ buffer for retransmitting with MCS 2
- 113: H-ARQ buffer for retransmitting with MCS 3
- 114: Inducing signal for retransmitting
- 115: Inducing signal for retransmitting
- 116: Inducing signal for retransmitting
- 117: Mapping of new data packets
- 118: Mapping of retransmitting data packets
- 119: Time slot 1
- 120: Time slot 2
- 217: Mapping of new data packets
- 218: Mapping of retransmitting data packets
- 219: Time slot 1
- 220: Time slot 2

## Claims

1. A method of transmitting data packets in a network, the method comprising:
providing a data packet to be transmitted,
determining a current modulation and coding scheme,
checking whether the provided data packet is a new data packet or a data packet already transmitted a first time,
transmitting the provided data packet using the current modulation and coding scheme in case the data packet is a new data packet,
in case the provided data packet was already transmitted a first time retransmitting the selected data packet using the same modulation and coding scheme as the first time.

2. The method according to claim 1,
wherein for the retransmitting of the data packet the modulation and coding scheme including puncturing and/or interleaving of the data packet is identical to that in the first transmitting of the retransmitted data packet.

3. The method according to claim 1,
wherein the current modulation and coding scheme is determined depending on at least one of the criteria of the group consisting of:
on channel state information,
a quality of service requirements of users or services, and
actual buffer occupancy.

4. The method according to claim 1,
wherein the transmission of new data packets is separated from the transmission of retransmitted data packets.

5. The method according to claim 4,
wherein the separation is performed in time.

6. The method according to claim 4,
wherein the separation is performed in space.

7. The method according to claim 4,
wherein new data packets and retransmitting data packets are mapped into a same time slot.

8. The method according to claim 7,
wherein the separation is performed by using separate positions in a time slot for new data packets and retransmitted data packets, wherein the respective positions of the data packets are signalled by indicators.

9. A device (101) for scheduling data packets, the device comprising:
a determination unit adapted to determine a modulation and coding scheme for a transmission of a data packet,
wherein the determination is performed depending on the fact whether a new data packet is to be transmitted or a data packet is to be retransmitted, which was already transmitted a first time.

10. The device (101) according to claim 9,
wherein the determination unit is adapted to select a current modulation and coding scheme in case a new data packet is to be transmitted.

11. The device (101) according to claim 9,
wherein the determination unit is adapted, in case the data packet to be transmitted was already transmitted a first time by using a first modulation and coding scheme, to select the first modulation and coding scheme.

12. The device (101) according to claim 9,
wherein the determination unit is adapted to select two different modulation and coding schemes for a mapping of data packets.

13. The device according to claim 9,
wherein the device is adapted to enable a separated transmission of new data packets and retransmitted data packets.

14. The device (101) according to claim 13,
wherein the transmission is separated in time and/or in space, and/or by using separate positions in a time slot for new data packets and retransmitted data packets, wherein the respective positions of the retransmitted data packets are signalled by an indicator.

15. A program element, which, when being executed by a processor, is adapted to control or carry out a method of transmitting data packets according claim 1.

16. A computer-readable medium, in which a computer program is stored which, when being executed by a processor, is adapted to control or carry out a method of transmitting data packets according claim 1.
